# FASCICULE DE BREVET EUROPEEN

(11) **EP 1 561 921 B1**
(45) Date de publication et mention de la délivrance du brevet: **12.09.2007**
(21) Numéro de dépôt: 05300069.1
(22) Date de dépôt: 28.01.2005
(51) Int. Cl.: F01N 7/18, F16J 15/06

(54) **Dispositif de fixation d'une sonde sur un collecteur d'echappement**
Anordnung zur Befestigung einer Sonde am Auspuffkrümmer
Device for mounting a probe to the exhaust manifold

(30) Priorité: 06.02.2004 FR 0450216
(43) Date de publication de la demande: 10.08.2005
(73) Titulaire: RENAULT s.a.s., 92100 Boulogne Billancourt (FR)
(72) Inventeur: Delaigue, Laurent, 92130, Issy-Les-Moulineaux (FR)

(56) Documents cités:
- GB-A- 1 271 661
- US-B1- 6 555 070

## Description

La présente invention concerne la fixation d'une sonde, par exemple décrite dans le document US-B-6555070 telle qu'une sonde à oxygène, sur un collecteur d'échappement.

Plus précisément, elle concerne la fixation d'une sonde sur un collecteur d'échappement dans l'ouverture d'une pièce intermédiaire de structure prise en sandwich entre la sonde et le collecteur,

Le montage d'une sonde à oxygène sur un collecteur d'échappement pose un problème d'étanchéité. Lorsque la sonde est vissée dans un bossage du collecteur, on place donc en général un joint d'étanchéité entre le collecteur et la sonde. Ce joint est comprimé, lors du serrage au couple de la sonde dans le bossage du collecteur.

Selon une autre disposition connue, on place souvent un élément de structure, tel qu'un écran thermique, entre la sonde et le collecteur. L'écran est alors pris en sandwich entre la sonde et le collecteur. Dans ce cas, il faut prévenir les risques de fuites de gaz d'échappement, de part et d'autre de l'écran, L'écran est centré par la sonde sur le collecteur, et fixé par plusieurs vis sur ce dernier.

Pour assurer l'étanchéité, de la liaison, on peut disposer autour de la sonde un joint métallique roulé imperdable, Toutefois, le jeu radial du joint par rapport à la sonde, et le jeu radial entre la sonde et l'écran thermique (nécessaire pour permettre le montage de l'écran sur le collecteur) sont contraignants, car l'écran est monté sous effort, et l'ensemble du système est hyperstatique, Dans ces conditions, l'étanchéité de la liaison aux gaz d'échappement est difficile à réaliser.

Dans un montage classique, tel que celui-ci, les risques de fuites de gaz d'échappement au niveau de interface entre la sonde à oxygène et le collecteur sont donc réels.

La présente invention vise à supprimer ce type de risque.

Dans cet objectif, elle propose que l'étanchéité de la liaison entre le collecteur, la sonde et la pièce intermédiaire, soit assurée par une bague circulaire de section en U ouverte vers l'extérieur, entourent l'ouverture de manière que les deux bronches du U s'étendent sur les deux faces de la pièce intermédiaire

De préférence, cette bague est un cylindre de tôle replié en U, de rayon légèrement inférieur à couverture de la pièce intermédiaire, de manière à disposer d'un jeu de débattement radial à l'intérieur de celle-ci.

L'invention sera mieux comprise à la lecture de la description suivante d'un mode de réalisation non limitatif de celle-ci, en se reportent aux dessins annexés, sur lesquels :
- la figure 1 montre l'implantation de la sonde sur le collecteur d'échappement,
- la figure 2 illustre un montage connu de l'état de la technique, et
- la figure 3 illustre le montage proposé par l'invention

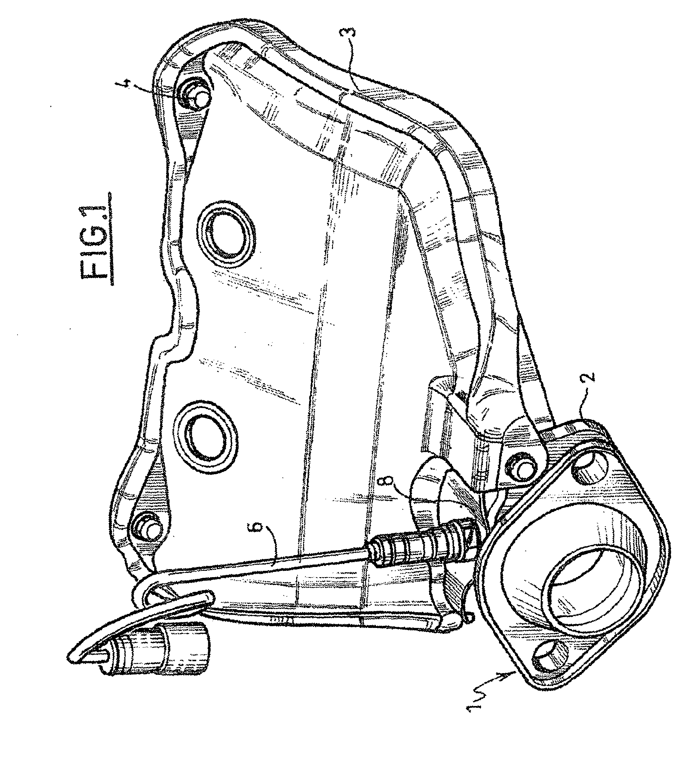

Sur la figure 1, on voit la face de fixation 1 d'un collecteur d'échappement 2 sur la culasse d'un moteur (non représentée). Un écran thermique 3 est fixe sur le collecteur 2 par plusieurs vis 4 et par le pied 6a de la sonde à oxygène 6. Comme indiqué ci-dessus, un tel système est hyperstatique en raison du nombre important de points de fixation de l'écran sur le collecteur (trois vis 4 et le pied 6a de la sonde sur le schéma). Cette disposition est très pénalisante pour réaliser l'étanchéité de la liaison entre la sonde et le collecteur.

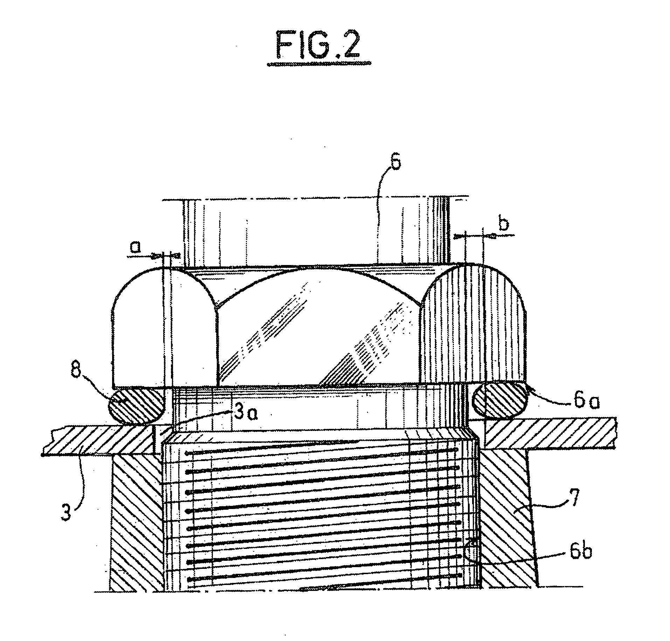

Sur la figure 2, on voit en coupe le bossage 7 du collecteur 2, dans lequel est vissée la sonde 6. Entre un rebord 6a de la sonde et extrémité supérieure du bossage 7, apparaissent un élément de structure plat 3, tel que l'écran thermique de la figure 1 et un joint d'étanchéité 8, La sonde 6 passe au travers d'un trou de passage 3a, ou ouverture, de l'écran 3. Le joint 8 est un joint en tôle roulée, déjà présent autour de la sonde 8 lors du montage de celle-ci sur le collecteur 3, et imperdable entre le rebord 6a et la section de vissage 6b de la sonde.

La figure 2 met en évidence les jeux radiaux a et b existant respectivement entre le joint et la sonde, et entre l'écran et la sonde. Dans un tel montage, lorsque l'écran est mal centré autour de la sonde lors du serrage, on voit que les zones de contact du joint avec l'écran et la rebord de la sonde sont réduites, de même que la zone de contact entre l'écran et le bossage 7 du collecteur.

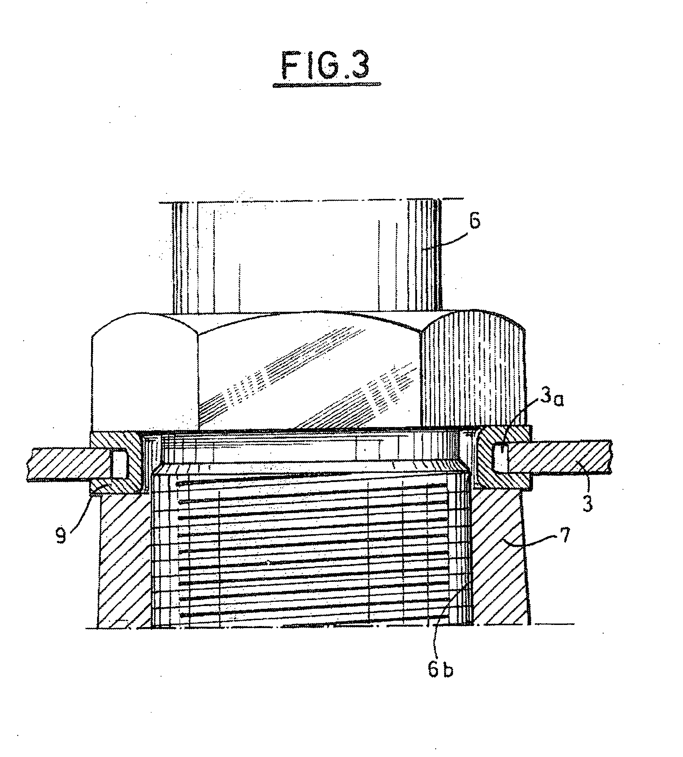

La figure 3 montre, comme la précédente, la fixation d'une sonde 6 sur un collecteur d'échappement 2 dans l'ouverture 3a d'une pièce intermédiaire de structure 3 prise en sandwich entre la sonde et le collecteur, Cette sonde 6 est par exemple, mais non obligatoirement, une sonde à oxygène, Elle passe au travers du trou ou ouverture 3a, et est vissée dans un bossage 7 du collecteur d'échappement 2 en prenant en sandwich la pièce 3 lors de son serrage. La pièce intermédiaire 3 est par exemple un écran de protection thermique fixé sur le collecteur d'échappement 2 par la sonde 6 et les vis 4.

Conformèrent à l'invention, l'étanchéité de la liaison entre le collecteur 2, la sonde 6 et la pièce intermédiaire 3, est assurée un joint d'étanchéité, se présentait sous la forme d'une bague circulaire 9. La bague 9 est un cylindre de tôle replié, de section en U. Le U est ouvert vers l'extérieur, Ce U entoure l'ouverture 3a de l'écran de fixation dans laquelle est introduite la sonde, de manière que les deux branches du U s'étendent sur les deux faces de la pièce intermédiaire.

Comme indiqué sur le schéma, la bague circulaire 9 est de rayon légèrement inférieur à l'ouverture 3a de la pièce intermédiaire, de manière à disposer d'un jeu de débattement radial J à l'intérieur de celle-ci, Par ailleurs, les branches du U recouvrent les deux faces de l'écran. Leur recouvrement R est supérieur au jeu radial J. Grâce. à cette disposition, la bague est imperdable vis à vis de l'écran.

L'avantage de cette solution réside dans le fait que le joint est autocentré par rapport à la position du trou de passage de la sonde lors de sa mise en place dans le collecteur d'échappement. L'étanchéité est assurée lors du serrage au couple de la sonde, par écrasement de la bague circulaire, entre la bague et le collecteur d'une part, et la bague et l'écran d'autre part.

## Revendications

1. Dispositif de fixation d'une sonde (6) sur un collecteur d'échappement (2) dans l'ouverture (3a) d'une pièce intermédiaire de structure (3) prise en sandwich entre la sonde et le collecteur, **caractérisé en ce que** l'étanchéité de la liaison entre le collecteur (2), la sonde (6) et la pièce intermédiaire (3), est assurée par une bague circulaire (9) de section en U ouverte vers l'extérieur qui entoure l'ouverture (3a) de manière que les deux branches du U s'étendent sur les deux faces de la pièce intermédiaire (3).

2. Dispositif de fixation selon la revendication 1, **caractérisé en ce que** la bague circulaire (9) est un cylindre de tôle replié en U.

3. Dispositif de fixation selon la revendication 1 ou 2, **caractérisé en ce que** la bague circulaire (9) est de rayon légèrement inférieur à l'ouverture (3a), de manière à disposer d'un jeu de débattement radial J à l'intérieur de celle-ci.

4. Dispositif de fixation selon la revendication 1, 2 ou 3, **caractérisé en ce que** les branches du U disposent d'un recouvrement R suffisant sur les faces de la pièce intermédiaire (3) pour rendre la bague (9) imperdable vis à vis de celle-ci.

5. Dispositif de fixation selon la revendication 3 et 4, **caractérisé en ce que** le recouvrement R est supérieur au jeu J.

6. Dispositif de fixation selon l'une des revendications précédentes, **caractérisé en ce que** la sonde (6) est vissée dans un bossage (7) du collecteur d'échappement (2).

7. dispositif de fixation selon l'une des revendications précédentes, **caractérisé en ce que** la pièce intermédiaire (3) est un écran de protection thermique fixé sur le collecteur d'échappement (2), d'une part par la sonde (6) et d'autre part par plusieurs vis de fixation (4).

8. Dispositif de fixation selon l'une des revendications précédentes, **caractérisé en ce que** la sonde (6) est une sonde à oxygène.

## Claims

1. Device for mounting a probe (6) on an exhaust manifold (2) in the opening (3a) of an intermediate structural part (3) sandwiched between the probe and the manifold, **characterized in that** the sealing of the connection between the manifold (2), the probe (6) and the intermediate part (3) is provided by a circular ring (9) with a U cross section open towards the outside which surrounds the opening (3a) so that the two arms of the U extend over the two faces of the intermediate part (3).

2. Mounting device according to Claim 1, **characterized in that** the circular ring (9) is a sheet metal cylinder formed into a U.

3. Mounting device according to Claim 1 or 2, **characterized in that** the circular ring (9) has a radius slightly smaller than the opening (3a), so as to have a radial displacement play J inside the opening.

4. Mounting device according to Claim 1, 2 or 3, **characterized in that** the arms of the U have a sufficient overlap R on the faces of the intermediate part (3) to render the ring (9) captive in relation to the intermediate part.

5. Mounting device according to Claims 3 and 4, **characterized in that** the overlap R is larger than the play J.

6. Mounting device according to one of the preceding claims, **characterized in that** the probe (6) is screwed into a boss (7) on the exhaust manifold (2).

7. Mounting device according to one of the preceding claims, **characterized in that** the intermediate part (3) is a protective heat shield fastened to the exhaust manifold (2), on the one hand by the probe (6) and on the other hand by several mounting bolts (4).

8. Mounting device according to one of the preceding claims, **characterized in that** the probe (6) is an oxygen sensor.

## Patentansprüche

1. Vorrichtung zur Befestigung einer Sonde (6) an einem Auspuffkrümmer (2) in der Öffnung (3a) eines Zwischenstrukturbauteils (3), das zwischen der Sonde und dem Krümmer eingeklemmt ist, **dadurch gekennzeichnet, dass** die Dichtheit der Verbindung zwischen dem Krümmer (2), der Sonde (6) und dem Zwischenbauteil (3) von einem kreisförmigen Ring (9) mit einem Querschnitt eines nach außen offenen U gewährleistet wird, der die Öffnung (3a) so umgibt, dass die zwei Schenkel des U sich auf den zwei Seiten des Zwischenbauteils (3) erstrecken.

2. Befestigungsvorrichtung nach Anspruch 1, **dadurch gekennzeichnet, dass** der kreisförmige Ring (9) ein U-förmig umgebogener Blechzylinder ist.

3. Befestigungsvorrichtung nach Anspruch 1 oder 2, **dadurch gekennzeichnet, dass** der kreisförmige Ring (9) einen geringfügig kleineren Radius hat als die Öffnung (3a), um über einen radialen Bewegungsspielraum J in deren Innerem zu verfügen.

4. Befestigungsvorrichtung nach Anspruch 1, 2 oder 3, **dadurch gekennzeichnet, dass** die Schenkel des U über eine ausreichende Überdeckung R auf den Seiten des Zwischenbauteils (3) verfügen, um den Ring (9) diesem gegenüber unverlierbar zu machen.

5. Befestigungsvorrichtung nach Anspruch 3 und 4, **dadurch gekennzeichnet, dass** die Überdeckung R größer ist als der Spielraum J.

6. Befestigungsvorrichtung nach einem der vorhergehenden Ansprüche, **dadurch gekennzeichnet, dass** die Sonde (6) in einen Ansatz (7) des Auspuffkrümmers (2) geschraubt ist.

7. Befestigungsvorrichtung nach einem der vorhergehenden Ansprüche, **dadurch gekennzeichnet, dass** das Zwischenbauteil (3) ein Wärmeschutzschild ist, das am Auspuffkrümmer (2) einerseits durch die Sonde (6) und andererseits durch mehrere Befestigungsschrauben (4) befestigt ist.

8. Befestigungsvorrichtung nach einem der vorhergehenden Ansprüche, **dadurch gekennzeichnet, dass** die Sonde (6) eine Lambdasonde ist.
